Europäisches Patentamt

(19) European Patent Office

Office européen des brevets

(11) Veröffentlichungsnummer: **0 298 903**
**B1**

(12) **EUROPÄISCHE PATENTSCHRIFT**

(45) Veröffentlichungstag der Patentschrift:
**22.11.90**

(51) Int. Cl.⁵: **B62D 25/20**, B62D 29/04

(21) Anmeldenummer: **88730141.4**

(22) Anmeldetag: **27.06.88**

(54) **Bodenplatte für ein Kraftfahrzeug.**

(30) Priorität: **04.07.87 DE 3722490**

(43) Veröffentlichungstag der Anmeldung:
**11.01.89 Patentblatt 89/2**

(45) Bekanntmachung des Hinweises auf die Patenterteilung:
**22.11.90 Patentblatt 90/47**

(84) Benannte Vertragsstaaten:
**AT BE CH DE ES FR GB GR IT LI LU NL SE**

(56) Entgegenhaltungen:
**DE-A- 3 035 644**
**DE-A-30 113 86**
**GB-A- 1 253 202**

(73) Patentinhaber: **INDUSTRIEKREDITBANK AG DEUTSCHE INDUSTRIEBANK, Bismarckstrasse 105,
D-1000 Berlin 12(DE)**

(72) Erfinder: **Treser Walter Dipl. Ing., Auenstr. 20,
D-8070 Ingolstadt(DE)**
Erfinder: **Gausmann Werner Dr. Ing., Kottbusser
Damm 9, D-Berlin 61(DE)**

(74) Vertreter: **Lüke, Dierck-Wilm, Dipl.-Ing.,
Gelfertstrasse 56, D-1000 Berlin 33(DE)**

## Beschreibung

Die Erfindung bezieht sich auf eine Bodengruppe für ein Kraftfahrzeug, insbesondere für Cabriolet, gemäß dem Oberbegriff des Anspruches 1.

Eine Bodengruppe dieser Art ist aus der DE-B 1 275 372 vorbekannt. Diese besteht aus einem tragenden Rahmen aus Längs- und Querträgern und aus diesen vollständig umschließenden Unter- und Oberschale aus Kunststoff. Bei der bekannten Bodengruppe sind die Längsränder der Unter- und Oberschale derart ausgebildet, daß ein Kastenprofil gebildet wird, in dessen Innerem der kastenartige Längsträger des Rahmens verläuft. Bei dieser Bodengruppe ist lediglich die Oberschale an einer speziell ausgebildeten Fläche an den Längsträgern festhaftend angebracht. Die Unterschale untergreift die Längsträger mit Abstand und ist über einen Flansch mit der Oberschale verbunden.

Es ist darüber hinaus aus der DE-B 1 680 609 eine selbsttragende Bodengruppe für ein Kraftfahrzeug bekannt, die aus zwei ausgeschäumten Schalen gebildet ist. Hierbei wird die gesamte tragende Funktion der Bodengruppe von den Unter- und Oberschalen sowie dem Kunststoffschaum übernommen. Als zusätzliche Versteifung können die Verteilerrohre für das Reaktionsgemisch dienen. Diese Bodengruppe benötigt aber sehr große Querschnitte zur Erreichung der nötigen Steifigkeit, wodurch die Material- und Herstellkosten derartiger Bodengruppen relativ hoch sind. Aus diesen Gründen ist die Herstellung von Bodengruppen aus Vollkunststoff für Kraftfahrzeuge bisher nicht angewendet worden.

Der Erfindung liegt ausgehend vom Oberbegriff die Aufgabe zugrunde, eine Bodengruppe für ein Kraftfahrzeug, insbesondere ein Cabriolet, der gattungsgemäßen Art zu schaffen, deren Steifigkeit bei geringerem Material- und Bauaufwand erhöht und die auch in kleinen Serien wirtschaftlich günstig herstellbar sowie relativ unempfindlich gegen aggressive Medien, insbesondere salzhaltige Wasser, ist.

Die Lösung dieser Aufgabe ergibt sich aus den kennzeichnenden Merkmalen des Patentanspruches 1. Durch die erfindungsgemäße Bodengruppe wird eine Verbundstruktur aus den Längs- und Querträgern des Rahmens, aus der Ober- und Unterschale sowie aus dem die verbleibenden Zwischenräume ausfüllenden Kunststoffschaum geschaffen, bei welcher der Rahmen selbst nicht die gesamte tragende Funktion der Bodengruppe übernimmt, sondern die Übernahme der gesamten tragenden Funktion erst durch die Vervollständigung der Bodengruppe durch Ankleben der Unter- und Oberschale aus Kunststoff an den Längs- und Querträgern sowie durch Ausschäumen der verbleibenden Zwischenräume zwischen den Schalen und den Trägern erfolgt. Erst diese Kombination ergibt die benötigte Steifigkeit der Bodengruppe für ein Kraftfahrzeug. Die erfindungsgemäße selbsttragende, flächenhafte Verbundstruktur der Bodengruppe eignet sich insbesondere für kleine Fahrzeugserien, da hierbei geringe Investitionskosten für Werkzeuge, Maschinen und dgl. bei akzeptablen Taktzeiten vorhanden sind. Die erfindungsgemäße, selbsttragende, flächenhafte Verbundstruktur der Bodengruppe ist darüber hinaus relativ umempfindlich gegen Feuchtigkeit und schließlich leicht von Gewicht.

Weitere vorteilhafte Ausgestaltungen der Erfindung ergeben sich aus dem Unteranspruch.

Die Erfindung ist nachfolgend anhand eines in den Zeichnungen dargestellten Ausführungsbeispieles einer Bodenplatte für ein Kraftfahrzeug näher erläutert.

Es zeigen:

Fig. 1 Perspektivische Einzeldarstellungen von Oberschale aus Kunststoff, Metallgerüst aus Aluminium-Strangpreßprofilen und Unterschale aus Kunststoff und

Fig. 2 einen Querschnitt durch eine Hälfte einer Bodenplatte für ein Kraftfahrzeug, insbesondere Cabriolet.

Die Bodenplatte ist für ein Kraftfahrzeug, insbesondere ein Cabriolet, bestimmt. Die Bodenplatte besteht aus einem Metallgerüst 1 aus Längsträgern 2 und Querträgern 3 und aus das Metallgerüst 1 sandwichartig einschließenden Ober- und Unterschalen 4 bzw. 5, wobei die zwischen den Unter- und Oberschalen 4,5 verbleibenden Zwischenräume mit Kunststoffschaum 6 vollständig ausgefüllt sind.

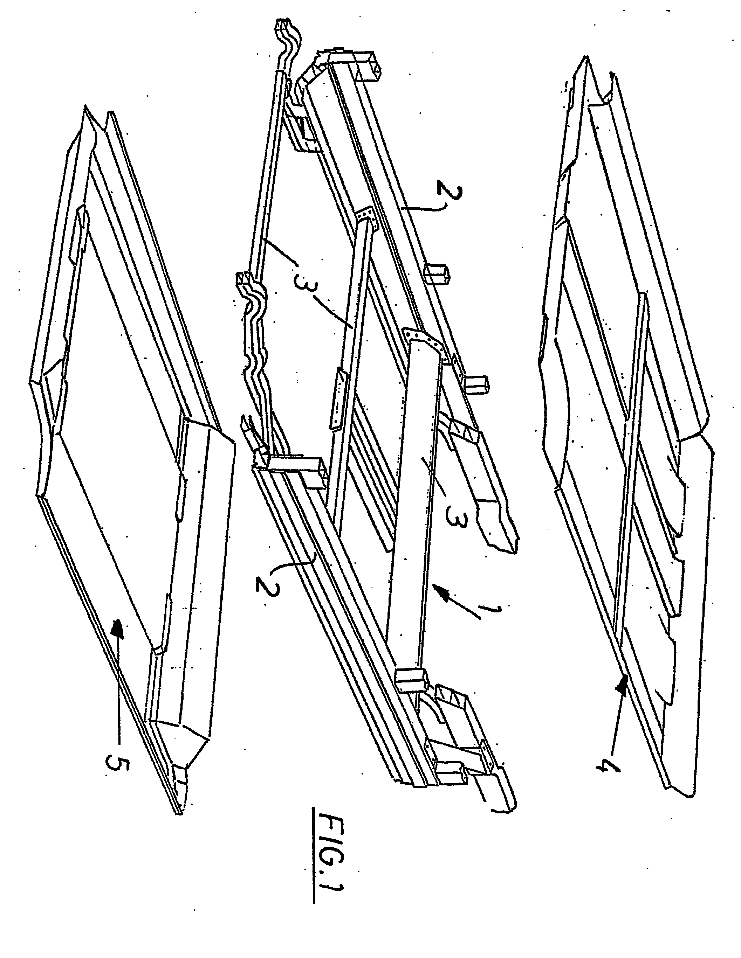

Das in Fig. 1 perspektivisch dargestellte Metallgerüst 1 umfaßt die Längsträger 2 und die Querträger 3, welche aus Aluminiumprofilen gebildet sind. Dieses Metallgerüst wird vormontiert, indem die Längs- und Querträger 2,3 miteinander durch Vernietung oder Verklebung fest verbunden werden.

Die Ober- und Unterschalen 4 bzw. 5 bestehen aus glasfaserverstärktem Kunststoff ( GFK ). Die Ober- und Unterschalen 4,5 werden in bekannter Weise hergestellt.

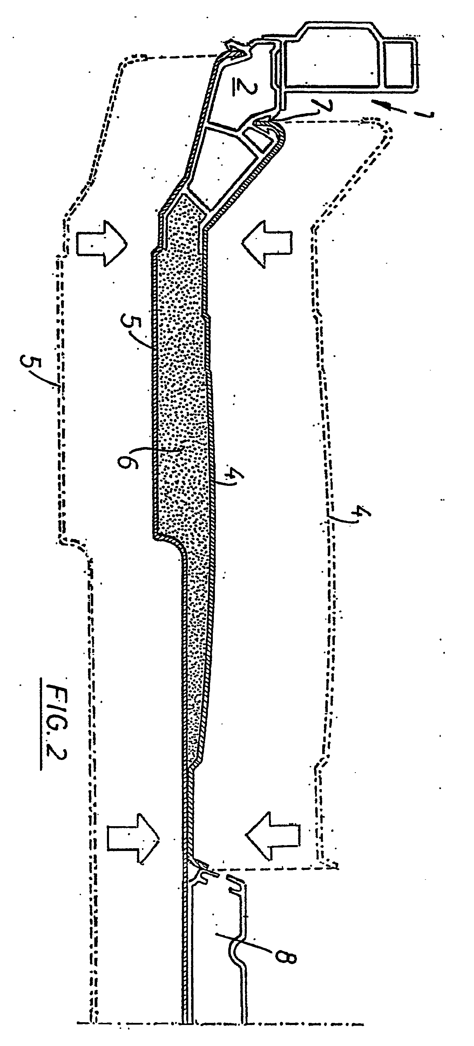

Zur Herstellung der Verbundstruktur der Bodenplatte wird das Metallgerüst 1 aus den Längs- und Querträgern 2,3 aus Aluminiumprofilen zwischen Oberschale 4 und Unterschale 5 aus ( GFK ) eingefügt, wie es in Fig. 2 in einem Teilquerschnitt durch die Bodenplatteschematisch gezeigt ist. Zur torsionsfesten, starren Verbindung weisen die Längsträger 2 Längsnuten 7 auf, in welche umgebogene Randteile von Ober- und Unterschale 4,5 eingreifen, welche in den Längsnuten 7 verklebt werden. Nach dem Zusammenfügen von Metallgerüst 1 und Ober- und Unterschale 5 werden die verbleibenden Zwischenräume durch Kunststoffschaum 6 ausgeschäumt. Als Kunststoffschaum wird Polyurethanschaum verwendet. Während des Ausschäumvorganges befindet sich die Bodenplatte in Abstützformen, um die beim Ausschäumvorgang auftretenen Kräfte aufnehmen zu können.

Die längsverlaufenden Hohlräume der in Fahrzeuglängsrichtung mittig verlaufenden Aluminiumprofile 8 dienen als Versorgungsschächte für die Bremsleitungen, Elektroleitungen u. dgl..

Die somit hergestellte selbsttragende, flächenhafte Verbundstruktur der Bodenplatte eines Kraftfahrzeuges, insbesondere Cabriolets, nimmt als tragende Bodenstruktur die Biege-und Torsionskräfte auf, die auf eine solche Kraftfahrzeug-Bodenplatte einwirken. Die Bodenstruktur besteht aus einer GFK-Sandwichstruktur aus dem mittragenden Metallgerüst 1, den Ober-und Unterschalen 4,5 aus GFK und dem diese verbindenden Polyurethanschaum 6. Die Bodenplatte wird hinsichtlich des Metallgerüstes 1 einerseits und der Ober-und Unterschalen 4,5 sowie des Kunststoffschaumes 6 andererseits derart ausgelegt, daß das Metallgerüst 1 für sich allein nicht die gesamte tragende Funktion der Bodenplatte übernehmen muß. Hieraus resultieren erhebliche Vorteile hinsichtlich der Gewichtseinsparung. Erst die Kombination aus Metallgerüst 1 und Ober- und Unterschale 4 bzw. 5 sowie Kunststoffschaum 6 ergibt die benötigte Steifigkeit der Bodenplatte des Kraftfahrzeuges .

Alle Verbindungen zum Zusammenfügen des Rahmens bzw. Metallgerüstes 1 mit der Ober- und Unterschale 4 , 5 erfolgen durch Kleben . Es werden bei den Verbindungen GFK - GFK , GFK - ALU und ALU - ALU zusätzlich nichtdargestellte Nieten zru Kompensation der bei Krafteinwirkung auf den Verbund für die Klebung ungünstigen Kraftkomponenten gesetzt . Bei der Verbindung GFK - Polyurethanschaum wird an der Grenzschicht GFK - PU-Schaum und ALU - PU-Schaum ein speziell strukturierter Bereich erzeugt, der die Materialdiskontinuitäten an den Übergangsstellen homogenisiert, so daß im Spannungsfall günstigere Spannungsverhältnisse auftreten.

## Patentansprüche

1. Bodengruppe für ein Kraftfahrzeug, insbesondere Cabriolet, bestehend aus einem metallischen Rahmen mit Längs- und Querträgern und aus, diesen zumindest teilweise abdeckend, Unter- und Oberschale aus Kunststoff, gekennzeichnet durch die Kombination der folgenden Merkmale,
– der metallische Rahmen ist derart ausgebildet, dass er für sich nicht die gesamte, tragende Struktur der Bodengruppe bildet,
– die Längsträger (2) des metallischen Rahmens sind jeweils mit zwei Längsnuten (7) versehen,
– Unter- und Oberschale (4; 5) weisen umgebogene Ränder auf, die in die Längsnuten (7) eingreifen,
– die Unter- und Oberschale (4; 5) sind mit dem Rahmen verklebt,
– die zwischen den Schalen (4; 5) und den Trägern (2) verbleibenden Zwischenräume sind mit Kunststoffschaum (6) vollständig ausgeschäumt und
– die Verbundstruktur aus Metallrahmen (2), Unter- und Oberschalen (4; 5) und Kunststoffschaum (6) übernimmt die tragende Funktion der Bodengruppe.

2. Bodengruppe nach Anspruch 1, dadurch gekennzeichnet, daß die Längs- und Querträger (2; 3) aus Aluminiumprofilen und die Unter- und Oberschale (4; 5) aus glasfaserverstärktem Kunststoff (GFK) gebildet sind und daß als Kunststoffschaum (6) Polyurethanschaum vorgesehen ist.

## Claims

1. A bottom plate for a motor vehicle, in particular a cabriolet, comprising a metal frame with longitudinal and traverse members of plastic covering at least partially such metal frame, characterized by the combination of the following features that
– the metal frame is designed such that it alone will not form the total supporting structure of the bottom plate,
– the longitudinal members (2) of the metal frame are each provided with two longitudinal grooves (7),
– bottom and top shells (4, 5) are provided with bent-off borders engaging into the longitudinal grooves (7),
– bottom and top shells (4, 5) are glued to the frame,
– the intermediate spaces left between the shells (4, 5) and the members (2) are completely filled up with plastic foam (6), and that
– the composite structure of metal frame (2), bottom and top shells (4, 5) and plastic foam (6) assumes the supporting function of the bottom plate.

2. A bottom plate according to claim 1, characterized by that the longitudinal and traverse members (2, 3) are made of aluminium sections and the bottom and top shells (4, 5) of glass-fibre reinforced plastic, and that polyurethane foam is provided as plastic foam (6).

## Revendications

1. Plaque de fond pour un vehicule à moteur, en particulier un cabriolet, comportant un cadre métallique d'entretoises longitudinales et transversales et d'enveloppes inférieures et supérieures de matière plastique couvrant celui-ci au moins partiellement, caractérisée par la combinaison des caractéristiques suivantes,
– le cadre métallique est agencé de telle sorte qu'il seul ne forme pas la totale fonction portante de la plaque de fond,
– les entretoises longitudinales (2) du cadre métallique sont pourvues chacune de deux rainures longitudinales (7),
– les enveloppes supérieures et inférieures (4, 5) comportent des parties repliées s'engageant dans les rainures longitudinales (7),
– les enveloppes supérieures et inférieures (4, 5) sont collées au cadre,
– les espaces intermédiaires restants entre les enveloppes (4, 5) et les entretoises (2) sont remplis complètement d'une mousse de plastique (6), et
– la structure composite du cadre métallique (2), des enveloppes inférieures et supérieures (4, 5) et de la mousse de plastique (6) reçoit la fonction portante de la plaque de fond.

2. Plaque de fond selon la revendication 1, caractérisée en ce que les entretoises longitudinales et transversales (2, 3) sont formées de profilés en aluminium, et les enveloppes supérieures et inférieures (4, 5) de matière plastique renforcée par fibres de verre, et que comme mousse de plastique (6), une mousse de polyuréthane est prévue.

FIG.1

FIG.2

EP 0 298 903 B1